# EUROPÄISCHE PATENTANMELDUNG

(11) **EP 1 320 020 A1**
(43) Veröffentlichungstag der Anmeldung: **18.06.2003**
(21) Anmeldenummer: 01129874.2
(22) Anmeldetag: 14.12.2001
(51) Int. Cl.: G06F 1/16, H04N 7/14

(54) **Informationstechnische Vorrichtung mit einer Kamera**

(71) Anmelder: SIEMENS AKTIENGESELLSCHAFT, 80333 München (DE)
(72) Erfinder: Hübner, Richard, 81925 München (DE)

(57) **Zusammenfassung**

Bei einem elektronischen Kleingerät wie z.B. einem Mobiltelefon, Persönlichen Digitalen Assistent oder ähnlichem ist eine Kamera (C1, C2) schwenkbar auf einer Gehäuseklappe der Vorrichtung abgebracht, auf deren Außen- und Innenseite Segmente (KB1, KB2, KB3) einer Eingabeeinrichtung angebracht sind. Je nach Öffnungszustand der Klappe ist das Okular (C1) der Kamera und die mit einem ersten Segment (KB1) der Eingabeeinrichtung versehene Außenseite der Gehäuseklappe zum Benutzer hin gerichtet, oder das Okular (C1) der Kamera ist vom Benutzer weg gerichtet ist, und die mit einem zweiten Segment (KB2) der Eingabeeinrichtung versehene Innenseite der Gehäuseklappe sowie der von der Gehäuseklappe im geschlossenen Zustand verdeckte Teil (KB3) der Gehäuseoberfläche sind zum Benutzer hin gerichtet. Die Vorrichtung verbindet eine komfortable, große Tastatur mit einer Kamera in einem informationstechnischen Gerät.

## Beschreibung

Mit der weiteren Entwicklung der Mobiltelephonie (GPRS, UMTS) wird eine Schwerpunktverschiebung der Anwendungen von der Sprachtelephonie und Textnachrichtenübermittlung (SMS) hin zu Multimedia-Nachrichtenübertragung, Internet-Anwendungen (Internet-Browsing), mobilen Verkaufs-Anwendungen (M-Commerce), interaktiven Kommunikations-Anwendungen (Chatting), interaktiven Spielen und mobilen Büroanwendungen einhergehen. Für solche Anwendungen ist eine leicht bedienbare, schnelle, in das Gerät eingebaute Texteingabevorrichtung von besonderer Bedeutung.

Numerische Tastaturen mit prädiktiven Texteingabealgorithmen (z.B. Tegic "T9") haben den Nachteil, dass der Benutzer eine Lernphase benötigt und die Akzeptanz nicht bei allen potentiellen Benutzern hoch ist. Außerdem ist ein zeitraubendes und umständliches Umschalten zwischen der Eingabe von Worten und Ziffern oder Sonderzeichen erforderlich. Auch die Eingabe in mehreren Sprachen erfordert ein Umschalten. Neue Worte, Abkürzungen, Namen und sogenannte "Emoticons" werden ohne zusätzliche Lernphase nicht erkannt und die Prädiktion erkannter Worte kann wegen unvermeidlicher Mehrdeutigkeiten, niemals vollständig zufriedenstellend sein. Insgesamt erscheinen derartige Systeme daher im Vergleich zu einer alphanumerischen Tastatur recht umständlich in der Handhabung, wenngleich sie in manchen Fällen nützlich sein können.

Eine bekannte Alternative zu numerischen Tastaturen mit prädiktiver Worterkennung sind berührungssensitive Anzeigeeinrichtungen (sogenannte Touch Screens) in Verbindung mit Algorithmen zur Handschrifterkennung, zur Erkennung einer speziellen Eingabe-Schrift (z.B. üblich bei einigen PDA-Produkten) oder mit einer auf der Anzeigeeinrichtung dargestellten alphanumerischen Tastatur (sogenanntes "on-screen keyboard").

Diese Lösungen haben folgende Nachteile gemeinsam: Der Benutzer benötigt eine Lernphase, um das System benutzen zu können; die Benutzer-Akzeptanz liegt vor allem deshalb deutlich unter 100%. Diese Art der Eingabe ist langsam im Vergleich zu echten alphanumerischen Tastaturen. Die Zeichen- oder Worterkennungsrate liegt ebenfalls deutlich unter 100%.

Eine weitere bekannte Möglichkeit ist die Spracherkennung, bei der ebenfalls eine - meist sehr lange - Lernphase erforderlich ist und die Erkennungsrate sehr stark vom verwendeten Vokabular, den Umgebungsgeräuschen und der Komplexität der Spracherkennungsalgorithmus abhängig ist. Außerdem gibt es Anwendungen, bei denen dieser Weg zur Eingabe von Text nicht die Bedürfnisse des Benutzers nach Diskretion erfüllen kann.

Viele Hersteller von Mobiltelefonen und anderen Kleingeräten haben daher die Notwendigkeit zur Bereitstellung alphanumerischer Tastaturen erkannt. Diese sind jedoch entweder zu klein und deshalb nur schwer handhabbar, oder zu groß und damit zu schwer für ein Kleingerät, das der Benutzer ständig bei sich tragen will. Der vorliegenden Erfindung liegt die Aufgabe zugrunde, diese Nachteile bekannter Texteingabe-Lösungen zu vermeiden.

Diese Aufgabe wird durch eine informationstechnische Vorrichtung mit Merkmalen nach einem der unabhängigen Ansprüche gelöst. Vorteilhafte Weiterbildungen der Erfindung ergeben sich aus Unteransprüchen.

Im folgenden wird die Erfindung anhand bevorzugter Ausführungsbeispiele und mit Hilfe einer Figur dargestellt.

Die informationstechnische Vorrichtung gemäß der vorliegenden Erfindung umfasst eine Kamera (C1, C2), die schwenkbar auf einer Gehäuseklappe der Vorrichtung abgebracht ist. Auf der Außen- und Innenseite dieser Gehäuseklappe sind Segmente (KB1, KB2, KB3) einer Eingabeeinrichtung angebracht. Je nach Öffnungszustand der Klappe ist in einem Fall das Okular (C1) der Kamera und die mit einem ersten Segment (KB1) der Eingabeeinrichtung versehene Außenseite der Gehäuseklappe zum Benutzer hin gerichtet. Im anderen Fall ist das Okular (C1) der Kamera vom Benutzer weg gerichtet, und die mit einem zweiten Segment (KB2) der Eingabeeinrichtung versehene Innenseite der Gehäuseklappe sowie der von der Gehäuseklappe im geschlossenen Zustand verdeckte Teil (KB3) der Gehäuseoberfläche sind zum Benutzer hin gerichtet.

Gemäß einer bevorzugten Ausführungsform der vorliegenden Erfindung ist der von der Gehäuseklappe im geschlossenen Zustand verdeckte Teil (KB3) der Gehäuseoberfläche mit einem dritten Segment der Eingabeeinrichtung versehen ist. Hierdurch ist es möglich, dem Benutzer in dem aufgeklappten Zustand des Gerätes, bei dem die Kamera vom Benutzer weg gerichtet ist, eine große Tastatur zur Eingabe von texten oder jedenfalls alphanumerischen Zeichen- und/oder Ziffernfolgen zur Verfügung zu stellen, die für Multimedia-Anwendungen mit Text-Elementen sehr wichtig ist. Der Benutzer hat im aufgeklappten Zustand des Gerätes so die Möglichkeit, ein digitales Bild der vor ihm liegenden Szene aufzunehmen, und dieses Bild, das ihm im Display DP angezeigt werden kann, über die Tastatur mit einem Text zu versehen. Er kann so das Bild z.B. in einer E-Mail zusammen mit einem längeren text über den möglicherweise in das Gerät integrierten Funkmodul versenden.

Im zusammengeklappten Zustand des Gerätes ist die Kamera auf den Benutzer gerichtet. In diesem Zustand kann er digitale Bilder von sich selbst und/oder hinter ihm befindlichen Personen oder Objekten aufnehmen und diese Bilder können über den Funkkanal zusammen mit den Sprachdaten eines Telefonats übertragen werden. In diesem für die Telephonie besonders geeigneten Zustand steht ihm vorzugsweise eine Wähltastatur zur Verfügung. Besonders vorteilhaft ist, dass der Benutzer die Möglichkeit hat, während eines Telephonats - ohne dieses zu unterbrechen - das Gerät aufzuklappen und die große alphanumerische Tastatur zu verwenden. Dann kann er natürlich Bilder der vor ihm liegenden Szene an den Gesprächspartner übertragen.

Im dem Bereich des Gerätes, der außerhalb der Klappvorrichtung liegt, vorzugsweise in der Nähe des Displays, befinden sich vorzugsweise Tasten (K1, K2), die vorzugsweise als Funktionstasten ausgelegt sind, wobei es besonders vorteilhaft ist, wenn die Funktionsbelegungen dieser Tasten jeweils - vom Zustand des Gerätes oder auf diesem laufender Prozesse abhängig - auf dem Display DP in der Nähe der Funktionstasten (K1, K2) zur Anzeige gebracht werden.

Die erfindungsgemäße Anordnung hat den Vorteil, dass eine relativ große und daher ergonomische alphanumerische Eingabevorrichtung in ein relativ kleines, leichtes und daher leicht zu handhabendes Gerät, z.B. in ein Mobiltelefon, integriert wird, welches dabei seine attraktive Form und seinen gewohnten Formfaktor behält.

Es ist daher bei einem erfindungsgemäßen Gerät nicht erforderlich, eine Tastatur in dem Display DP einzublenden; das Display kann daher zu jeder zeit umfangreiche und detaillierte Statusinformation anzeigen, die für eine leichte Bedienung des Gerätes sehr wichtig ist.

Zur besonders robusten mechanischen und elektronischen Verbindung der Gehäuseklappe mit dem Hauptgehäuse des Gerätes sind vorzugsweise Scharniere (101, 102) vorgesehen, die im zusammengeklappten Zustand des Gerätes formschlüssig mit den Gehäusekonturen des Gerätes zusammenfallen. Hierdurch wird die Betriebssicherheit des Gerätes erhöht und eine Verletzung des Benutzers an möglicherweise vorhandenen scharfen Kanten praktisch ausgeschlossen.

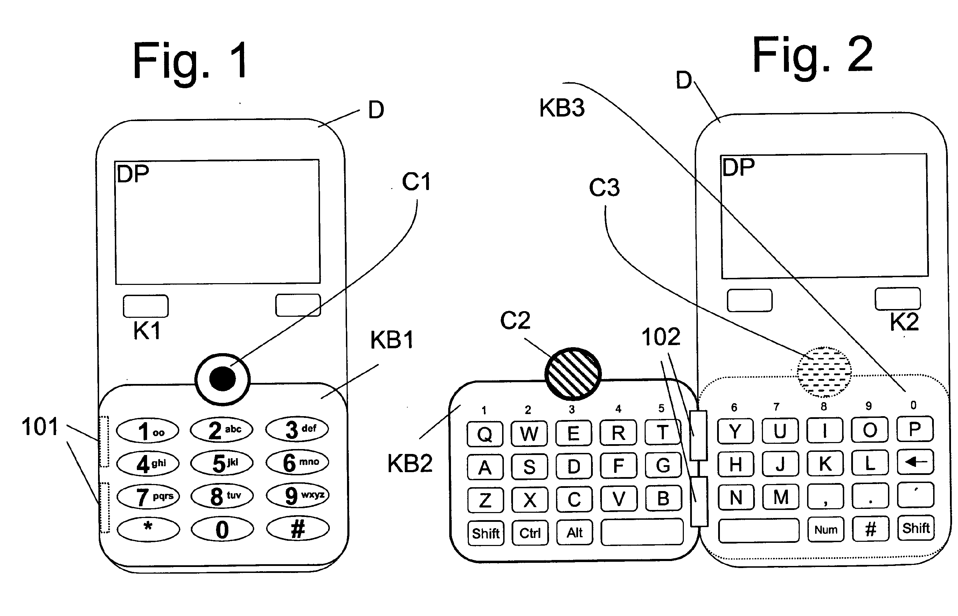

## Patentansprüche

1. Informationstechnische Vorrichtung (D), insbesondere elektronisches Kleingerät wie z.B. Mobiltelefon, Persönlicher Digitaler Assistent oder ähnliches, mit einer Kamera (C1, C2), die schwenkbar auf einer Gehäuseklappe der Vorrichtung abgebracht ist, auf deren Außen- und Innenseite Segmente (KB1, KB2, KB3) einer Eingabeeinrichtung angebracht sind, wobei je nach Öffnungszustand der Klappe
a) das Okular (C1) der Kamera und die mit einem ersten Segment (KB1) der Eingabeeinrichtung versehene Außenseite der Gehäuseklappe zum Benutzer hin gerichtet ist, oder
b) das Okular (C1) der Kamera vom Benutzer weg gerichtet ist, und die mit einem zweiten Segment (KB2) der Eingabeeinrichtung versehene Innenseite der Gehäuseklappe sowie der von der Gehäuseklappe im geschlossenen Zustand verdeckte Teil (KB3) der Gehäuseoberfläche zum Benutzer hin gerichtet sind.

2. Informationstechnische Vorrichtung nach Anspruch 1, bei welcher der von der Gehäuseklappe im geschlossenen Zustand verdeckte Teil (KB3) der Gehäuseoberfläche mit einem dritten Segment der Eingabeeinrichtung versehen ist.
